**Europäisches Patentamt**

**European Patent Office**

**Office européen des brevets**

(19)

(11) Veröffentlichungsnummer: **0 040 290
B2**

(12) ## NEUE EUROPÄISCHE PATENTSCHRIFT

(45) Veröffentlichungstag der neuen Patentschrift:
**22.03.89**

(21) Anmeldenummer: **81100930.7**

(22) Anmeldetag: **11.02.81**

(51) Int. Cl.⁴: **B 60 K 5/12,** F 16 F 9/10

(54) Elastisches Gummilager.

(30) Priorität: **21.05.80 DE 3019337**

(43) Veröffentlichungstag der Anmeldung:
**25.11.81 Patentblatt 81/47**

(45) Bekanntmachung des Hinweises auf die Patenterteilung:
**01.02.84 Patentblatt 84/5**

(45) Bekanntmachung des Hinweises auf die Entscheidung
über den Einspruch:
**22.03.89 Patentblatt 89/12**

(84) Benannte Vertragsstaaten:
**DE FR GB IT SE**

(56) Entgegenhaltungen:
**EP-A- 0 006 819
EP-A- 0 012 638
EP-A- 0 027 751
DE-A- 2 618 333
DE-A- 2 652 501
DE-A- 2 727 244
DE-A- 2 802 896
DE-A- 2 905 090
DE-A- 2 905 091
DE-A- 2 937 052
DE-A- 3 040 396
DE-C- 2 905 090
DE-C- 2 905 091**

(73) Patentinhaber: **Firma Carl Freudenberg, Höhnerweg 4,
D-6940 Weinheim/Bergstrasse (DE)**

(72) Erfinder: **Hamaekers, Arno, Brunhildstrasse 27,
D-6944 Hemsbach (DE)**
Erfinder: **Ticks, Gerd-Heinz, Am Mühlbusch,
D-6943 Birkenau (DE)**
Erfinder: **Rudolf, Hans-Joachim,
Anton-Günther-Strasse 9, D-2902 Rastede (DE)**

(74) Vertreter: **Weissenfeld-Richters, Helga, Dr.,
Höhnerweg 2, D-6940 Weinheim/Bergstrasse (DE)**

(56) Entgegenhaltungen: (Fortsetzung)
**DE-U- 1 805 392
FR-A- 2 372 351
GB-A- 811 748
US-A- 2 387 066
US-A- 3 202 388**

EP 0 040 290 B2

## Beschreibung

Die Erfindung betrifft ein elastisches Gummilager, bei dem eine Lagerplatte, ein ringförmig ausgebildetes, kegeliges Federelement und eine Bodenplatte einen mit einer hydraulischen Flüssigkeit gefüllten Arbeitsraum umschliessen, der durch eine Düse mit einem Ausgleichsraum verbunden ist, wobei die Bodenplatte eine flüssigkeitsdicht damit verbundene Scheibe enthält, die parallel zur Richtung der eingeleiteten Schwingungen beweglich ist und wobei beiderseits der Scheibe ein mit der Bodenplatte verbundener Anschlag vorgesehen ist.

Ein Gummilager der eingangs genannten Art ist aus der FR-A 2 372 351 bekannt. Zusätzlich zu dem Arbeitsraum ist dabei auch der Ausgleichsraum elastisch begrenzt, was nach dem Aufbringen der zu tragenden Last eine Vorspannung in dem Federelement zur Folge hat. Die Düse ist in der Scheibe enthalten, d.h. relativ beweglich in bezug auf die Bodenplatte. Sowohl die Dämpfungs- als auch die Isoliereigenschaften sind noch wenig befriedigend.

Ein anderes Gummilager ist aus GB-A 811 748 bekannt.

Die Düse ist dabei zentrisch in einer den Arbeitsraum und den Ausgleichsraum voneinander trennenden Membran angeordnet, wodurch sie ihre Lage in Abhängigkeit von der Amplitude der jeweils eingeleiteten Schwingungen stetig und in undefinierter Weise verändert. Schwingungen mit grosser Amplitude können dadurch nur in einem unzureichenden Masse gedämpft werden. Eine Verbesserung der erzielten Dämpfungswirkung von Schwingungen dieser Art ist durch eine Dämpfung der Beweglichkeit der Membrane möglich. Dabei muss aber eine Verschlechterung der Isoliereigenschaften gegenüber Schwingungen mit niedriger Amplitude in Kauf genommen werden.

Der Erfindung liegt die Aufgabe zugrunde, ein elastisches Gummilager zu entwickeln, bei dem die erzielte Dämpfungswirkung und die erzielte Isolierwirkung unabhängig voneinander optimiert werden können, und das dadurch sowohl gute Dämpfungseigenschaften als auch eine gute Isolierwirkung aufweist. Unter einer guten Isolierwirkung ist in bezug auf eine Verwendung als Motorlager insbesondere zu verstehen, dass eine Körperschallübertragung vom Motor auf das Chassis des Fahrzeuges weitgehend ausgeschlossen werden kann.

Zur Lösung dieser Aufgabe wird eine Weiterentwicklung des eingangs beschriebenen, elastischen Gummilagers vorgeschlagen, die dadurch gekennzeichnet ist, dass der Ausgleichsraum nach aussen durch einen flexiblen Balg begrenzt ist, dass die Düse für die hydraulische Flüssigkeit dem Tragflansch starr zugeordnet ist, dass das Verhältnis aus der Länge und dem Durchmesser der Düse 4 bis 80 beträgt und dass das Verhältnis aus dem Volumen des Arbeitsraumes bei entlastetem Gummilager und dem Volumen der Düse 4 bis 200 beträgt.

Die vorteilhaften Eigenschaften des vorgeschlagenen Gummilagers ergeben sich aus der folgenden Funktion:

Das vorgeschlagene Gummilager ist ein hydraulisches Einkammer-Gummilager, d.h. der hydraulische Innendruck in dem Arbeitsraum ist unabhängig von der statischen Belastung, und die sich infolge der eingeleiteten Schwingungen darin ergebenden Druckveränderungen sind rein dynamischer Natur. Sie haben keinen Einfluss auf die Federungscharakteristik des den Arbeitsraum in einem Teilbereich begrenzenden Federelementes aus gummielastischem Werkstoff. Dieses kann in seinem Querschnitt infolgedessen beliebig gestaltet werden, und damit auch so, dass eine optimale Isolierung von eingeleiteten Schwingungen mit einer kleinen Amplitude gewährleistet ist. Schwingungen dieser Art können dadurch beschrieben werden, dass das von dem Federelement jeweils verdrängte Flüssigkeitsvolumen kleiner sein muss als das durch eine synchrone Ausweichbewegung der Scheibe aufnehmbare Volumen. Eine Verschiebung von Flüssigkeitsbestandteilen durch die Düse in den Ausgleichsraum findet bei Einleitung derartiger Schwingungen nicht statt.

Bei Einleitung von Schwingungen mit einer grösseren Amplitude wird die freie Beweglichkeit der Scheibe durch die beiderseits davon angeordneten Anschläge behindert, und es kommt zu einem dynamischen Druckaufbau in dem Arbeitsraum mit der Folge einer synchronen Verschiebung des in der Düse enthaltenen Flüssigkeitsvolumens. Bei Verwendung üblicher Hydrauliköle ergibt sich dann ein optimaler Dämpfungseffekt für die eingeleiteten Schwingungen, wenn das Verhältnis aus der Länge und dem Durchmesser der Düse 4 bis 80 beträgt und wenn das Verhältnis aus dem Volumen des Arbeitsraumes und dem Volumen der Düse 4 bis 200 beträgt, wobei ein Bereich von 10 bis 30 bzw. 8 bis 60 bevorzugt wird. Die ausgezeichnete Dämpfungswirkung in bezug auf die Einleitung von Schwingungen mit grosser Amplitude beruht neben der durch den engen Durchlassquerschnitt der Düse bedingten Drosselwirkung auch auf dynamischen Effekten, insbesondere auf der Tilgung der eingeleiteten Schwingungen infolge Hin- und Herbewegungen der Masse des in der Düse enthaltenen Flüssigkeitsvolumens. Der Ausgleichsraum soll zur Verhinderung eines Druckaufbaues im Inneren durch einen flexiblen Balg mit besonders weichelastischen Eigenschaften begrenzt sein. Sofern der Ausgleichsraum durch einen Faltenbalg aus einem plastomeren oder einem elastomeren Werkstoff begrenzt ist, beispielsweise aus PVC oder Gummi, muss ein besonders weicher Werkstoff ausgewählt werden. Unter Verwendung von Rollmembranen lassen sich gute Ergebnisse erzielen, wenn diese aus einem flexiblen Gewebe bestehen, das ein- oder beidseitig durch eine Beschichtung aus einem elastomeren oder einem plastomeren Werkstoff abgedichtet ist. Die Wandstärke einer derartigen Rollmembran kann bis auf wenige zehntel Millimeter reduziert sein. Um eine mechanische Beschädigung zu verhindern, kann ein entsprechend ausgebildeter Balg beispielsweise in einem Schutzkorb oder -topf aus einem metallischen Werkstoff angeordnet werden, der fest mit der Lagerplatte verbunden ist. Durch zweckmässig angebrachte Entlüftungsöffnungen ist dabei eine freie Beweglichkeit der Membran zu gewährleisten.

Die Scheibe ist gegenüber der Lagerplatte abgedichtet und frei beweglich. Es ist generell denkbar, der Scheibe die Gestalt eines Schwebekolbens zu geben, wobei die Beweglichkeit durch die zu überwindenden Reibungskräfte behindert werden kann. Das Lagerspiel eines solchen Schwebekolbens, der beispielsweise die Gestalt einer ebenen Platte aus Gummi oder Kunststoff haben kann, muss deshalb so gemessen werden, dass einerseits die Beweglichkeit nicht behindert wird, und dass andererseits eine ausreichende Abdichtung gegenüber der Lagerplatte gewährleistet ist. Das Zustandekommen einer nennenswerten hydraulischen Verbindung zwischen dem Arbeitsraum und zwischen dem Ausgleichsraum ist im Sinne der vorliegenden Erfindung unerwünscht.

Es ist auch möglich, den Schwebekolben durch ein membranartiges Übergangsstück flüssigkeitsdicht, jedoch beweglich mit der Bodenplatte zu verbinden. Dabei lässt sich aber eine gewisse Beeinträchtigung der freien Beweglichkeit des Kolbens nicht vermeiden, was sich in schwierigen Fällen nachteilig auf die Entkopplung hochfrequenter Schwingungen und damit der Isoliereigenschaften des Gummilagers auswirken kann.

Im allgemeinen wird eine runde Form bevorzugt. Es ist jedoch in Abhängigkeit von der Gestalt des elastischen Gummilagers auch möglich, gegebenenfalls abweichende Formen zu wählen, beispielsweise eine ovale Gestalt. In allen Fällen wird angestrebt, dass der bewegliche Teil der Scheibe wenigsten 50% des Innendurchmessers des Arbeitsraumes überdeckt. Hierdurch lassen sich Querströmungen und andere unerwünschte Effekte bei Einleitung kleiner Schwingungen weitgehend unterdrücken.

Die Scheibe kann flexibel ausgebildet sein und beispielsweise aus einem gummielastischen Werkstoff bestehen. In diesem Falle ist es notwendig, die Anschläge in Abhängigkeit von der Flexibilität durch mit dem Tragflansch verbundene, regelmässig wiederkehrende Aussparungen aufweisende Gitter zu ersetzen, deren Oberflächenanteil 40 bis 90% beträgt. Die Dicke der Scheibe kann im Bereich des Einsparungsquerschnittes vermindert sein, um eine besonders leichte Beweglichkeit zu ermöglichen. Der jeweilige Abstand von den beiderseits angeordneten Anschlägen ist spiegelbildlich gleich, er kann jedoch über dem Durchmesser der Scheibe variiert sein, und beispielsweise in der Mitte, wo stärkere Deformationen auftreten, wesentlich grösser sein als im Bereich der Randzonen.

Es ist eine gleichmässige Zunahme zur Mitte hin möglich, jedoch auch eine Zunahme des Abstandes, der sich asymptotisch bei etwa ¼ des Abstandes vom Mittelpunkt der Scheibe einem Maximalwert nähert.

Die Düse kann eine die Scheibe umgebende Aussparung der Bodenplatte sein, deren Austrittsöffnungen beiderseits tangential in den jeweiligen Räumen enden. Es ist auch möglich, in der Bodenplatte zwei spiegelbildliche Anschlagplatten anzuordnen, die in einer Richtung parallel zur Richtung der eingeleiteten Schwingungen nicht beweglich, jedoch gegenüber der Bodenplatte abgedichtet und gegeneinander drehbar sind. Auch hierbei ist im mittleren Bereich eine Aussparung zur Aufnahme der Scheibe vorgesehen sowie eine Vielzahl von Durchbrechungen zur Bildung des Anschlaggitters für die Scheibe. Das Anschlaggitter ist von der spiralig angeordneten Aussparung umgeben, die auf der Oberfläche der Stirnseite der einen Anschlagplatte beginnend, im Verlauf eine zunehmende Tiefe annimmt, die Anschlagplatte schliesslich durchdringt und auf der Rückseite gleichsinnig mit abnehmender Tiefe fortgesetzt ist. Durch die spiegelbildliche Zusammenfassung beider Anschlagplatten und ein gegenseitiges Verdrehen lässt sich die tatsächliche Länge und, bedingt, der Querschnitt der von den beiderseitigen Aussparungen gebildeten Düse sehr exakt einstellen, wodurch die erzielte Dämpfung grössenordnungsmässig optimiert und auf einen bestimmten Frequenzbereich eingestellt werden kann. Es wurde gefunden, dass sich bei einer entsprechenden Ausführung bei der Einfederung der Lagerplatte in Richtung der Austrittsöffnungen eine gleichgerichtete Kreisströmung der hydraulischen Flüssigkeit im Arbeitsraum und im Ausgleichsraum ausbildet, deren Richtung beim Ausfedern spontan wechselt. Bei der Abbremsung der in beiden Räumen rotierenden Flüssigkeitsmassen und deren erneuter Beschleunigung wird ein Teil der eingeleiteten Schwingungsenergie irreversibel vernichtet, wodurch der Effekt der Verwendung einer relativ langen Düse zwischen den beiden Räumen wesentlich verstärkt wird. Besonders gute Eigenschaften lassen sich durch Verwendung mehrerer Düsen erzielen, die auf dem Umfang in gleichmässigen Abständen verteilt, und deren Austrittsöffnungen gleichsinnig orientiert sind.

Als hydraulische Flüssigkeit können die üblichen Hydrauliköle verwendet werden. Es bedarf der besonderen Beachtung, dass die ausgewählte Flüssigkeit im Bereich der unter Betriebsbedingungen zu erwartenden Temperaturen eine ausgeglichene Viskosität aufweist. Als vorteilhafter hat sich unter diesem Gesichtspunkt die Verwendung eines Gemisches aus Glykol und Wasser bewährt, vorzugsweise aus Glycerin und Wasser, wobei die beiden Substanzen vorzugsweise in einem Verhältnis von 1:1 bis 2:1 untereinander vermischt werden.

In der Zeichnung ist Bezug genommen auf eine beispielhafte Ausführung des erfindungsgemässen Gummilagers. Es zeigt

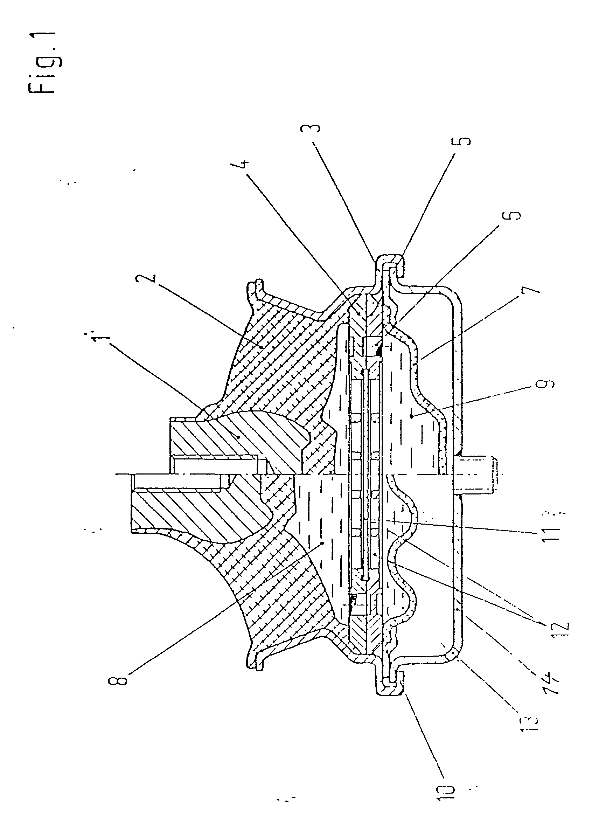

Fig. 1 ein Gummilager in längsgeschnittener Darstellung. Der linke Teil der Darstellung nimmt Bezug auf eine Belastungssituation, in der die Lagerplatte ausgefedert ist, der rechte Teil der Darstellung nimmt Bezug auf eine Belastungssituation, in der die Lagerplatte unter Einwirkung einer Last eingefedert ist.

Fig. 2 zeigt die Anschlagplatten 4, 5 in der Draufsicht.

Fig. 3 zeigt die Anschlagplatten gemäss Fig. 1 in längsgeschnittener Darstellung.

Fig. 4 nimmt Bezug auf einen Längsschnitt durch die Düse 6 bei einer Lagerplatte entsprechend den Fig. 2 und 3.

Das dargestellte Gummilager besteht aus einer Lagerplatte 1 mit einer darin angeordneten Bohrung mit einem Gewinde zur Befestigung eines darauf zu lagernden, schwingenden Maschinenelementes, beispielsweise eines Motors oder eines Radlagers. Die Lagerplatte hat eine kreisförmige Gestalt, und sie ist durch ein kegeliges Federelement 2 aus einem gummielastischen Werkstoff unlösbar an die Bodenplatte 3 anvulkanisiert. Die das Federelement gegenüber der Lagerplatte und gegenüber der Bodenplatte begrenzenden Flächen sind im wesentlichen zueinander parallel ausgerichtet. Die Bodenplatte ist darüber hinaus mit einem Flansch mit mehreren Bohrungen versehen, um eine Verschraubung beispielsweise an einer Fahrzeugkarosserie zu ermöglichen.

Die Bodenplatte weist auf der Innenseite eine umlaufende, winkelförmig nach innen geöffnete Aussparung auf, in der die Anschlagplatten 4, 5 und der flexible Balg 7 mit einem Haltering 10 flüssigkeitsdicht verankert sind. Die Anschlagplatten weisen im mittleren Bereich gitterartige Durchbrechungen 12 auf, und die Aussparungen sind so bemessen, dass sich beiderseits ein axialer Abstand von der beweglichen Scheibe 11 aus einem elastomeren Werkstoff ergibt. Die Scheibe ist mit einem umlaufenden Wulst ausserhalb des Gitters zwischen den beiden Anschlagplatten flüssigkeitsdicht eingespannt.

Die Dicke der Scheibe ist in einer radialen Richtung innerhalb des Wulstes vermindert, um eine verbesserte Beweglichkeit zu erhalten. Sie kann auch ohne eine kraftschlüssige Einspannung in axialer Richtung frei beweglich in der Aussparung gelagert sein.

Die beiden Anschlagplatten werden ausserdem von der das durch die Durchbrechungen 12 gebildete Gitter spiralig umgebenden Düse 6 durchdrungen, wobei die beiderseitigen Aussparungen möglichst gleichmäsig ineinander übergehen sollen. Im Hinblick auf eine gute Einstellmöglichkeit der Länge der Düse durch ein gegenseitiges Verdrehen der beiden Anschlagplatten 4, 5 gegeneinander haben sich kleine Winkel bewährt, beispielsweise Werte von weniger als 10°, bevorzugt in einem Bereich von 1 bis 4°. Sind auf dem Umfang der Anschlagplatten hingegen mehrere Düsen in gleichmässigen Abständen verteilt, dann kann sich aus geometrischen Gründen die Notwendigkeit ergeben, grössere Steigungswinkel zu wählen, beispielsweise solche in einem Bereich von 20 bis 30°. Ungeachtet dessen ist es in allen Fällen anzustreben, dass die beiderseitigen Enden einerseits tangential in den Arbeitsraum 8 münden, andererseits in den Ausgleichsraum 9.

Der Ausgleichsraum wird nach unten durch einen flexiblen Balg 7 begrenzt, der als Rollmembran ausgebildet ist. Diese besteht aus einer weichen Gummischicht, die durch ein Gewebe aus Polyesterfäden verstärkt ist.

Die Rollmembran hat eine durchschnittliche Wandstärke von 0,3 mm. Sie ist wegen ihrer mechanischen Empfindlichkeit durch eine zusätzliche Schutzkappe 14 aus Stahlblech besonders geschützt. Die Schutzkappe weist eine Entlüftungsöffnung 13 auf, um eine freie Beweglichkeit der Rollmembrane zu gewährleisten. Es ist daneben möglich, die Schutzkappe robust auszuführen und anstelle eines Flansches der Bodenplatte zur Verankerung des Gummilagers zu verwenden.

Die verwendete hydraulische Flüssigkeit ist ein Gemisch aus Wasser und Glycerin im Verhältnis 1:2. Sie weist in einem Temperaturbereich von −30° bis +100°C eine gleichmässige Viskosität auf, und eine die Dämpfungswirkung beeinträchtigende Schaumbildung findet auch bei Einleitung hoher Frequenzen nicht statt. Der freie Durchlassquerschnitt der Düse beträgt bei einem Volumen des Arbeitsraumes von 58 cm³ 43 mm².

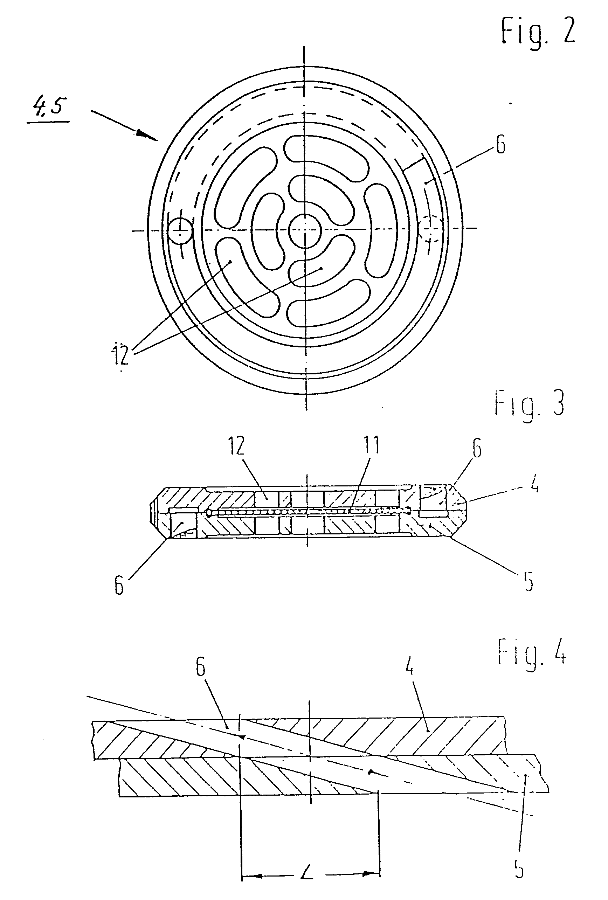

In Fig. 2 sind die beiden untereinander verbundenen Anschlagplatten 4, 5 in der Draufsicht wiedergegeben. Die durch die Aussparung gebildete Düse 6 durchdringt in einer spiraligen Windung die einzelne Anschlagplatte mit einer Dicke von ca. 6 mm auf einer Länge von ca. 430° mit gleichmässiger Steigung. Durch die Fortsetzung der Aussparung in der Aussparung der spiegelbildlich zugeordneten Gegenplatte ergibt sich nahezu auf der gesamten Länge ein gleichbleibender Querschnitt. Die Länge kann durch ein gegenseitiges Verdrehen der beiden Anschlagplatten eingestellt werden, was durch Fig. 4 verdeutlicht werden soll. Fig. 4 nimmt Bezug auf den Verlauf der Düse 6 durch die beiden Anschlagplatten 4, 5, wobei aus Gründen der Anschaulichkeit auf eine massstäbliche Wiedergabe verzichtet wurde. Im Vergleich zur Dicke der Anschlagplatten ist die Länge der Düse deshalb in wesentlich verkürzter Form wiedergegeben. Es ist jedoch erkennbar, dass bei einer relativen Verschiebung der Anschlagplatte 5 in bezug auf die Anschlagplatte 4 eine Verlängerung bzw. eine Verkürzung der Düse 6 eintritt, und in begrenztem Masse auch von deren Querschnitt. Dieser Vorgang wird bei den Anschlagplatten gemäss Fig. 2 durch ein gegenseitiges Verdrehen praktisch nachvollzogen. Das vorgeschlagene Gummilager lässt sich dadurch hinsichtlich der erzielten Dämpfungswirkung sowohl grössenmässig optimieren als auch hinsichtlich der Lage der Dämpfungswirkung auf einen bestimmten Frequenzbereich einstellen. Die Anschlagplatten können aus Metall oder Kunststoff bestehen, wobei jedoch eine Ausführung aus Aluminiumdruckguss wegen der grossen mechanischen Steifigkeit bevorzugt wird.

Der rechnerische Durchmesser der Düse ergibt sich bei dem dargestellten, von einem runden Profil abweichenden Querschnitt als quadratische Wurzel aus dem Produkt des Faktors 1,27 und der Querschnittsfläche der Düse. Abweichende Querschnittsformen können entsprechend in die beanspruchte Formel eingesetzt werden. Sie haben keinen Einfluss auf die Wirkungsweise.

Die Länge der Düse entspricht der Strecke, auf der das Profil der Aussparung auf allen Seiten durch feste Wände begrenzt ist. Die sich an diesen Bereich beiderseits anschliessenden Ein- und Auslaufkeile gleicher Steigung werden nicht mitgerechnet und bleiben ausser Betracht. Die Länge ist in Fig. 4 mit «L» bezeichnet.

Als Volumen des Arbeitsraumes wird das Volumen eingesetzt, das sich bei entlastetem Gummilager ergibt.

**Patentansprüche**

1. Elastisches Gummilager, bei dem eine Lagerplatte (61), ein ringförmig ausgebildetes, kegeliges Federelement (2) und eine Bodenplatte (3) einen mit einer hydraulischen Flüssigkeit gefüllten Arbeitsraum (8) umschliessen, der durch eine Düse (6) mit einem Ausgleichsraum (9) verbunden ist, und wobei die Bodenplatte eine flüssigkeitsdicht damit verbundene Scheibe (11) enthält, die parallel zur Richtung der eingeleiteten Schwingungen beweglich ist, und wobei beiderseits der Scheibe (11) ein mit der Bodenplatte (3) verbundener Anschlag (4, 5) vorgesehen ist, dadurch gekennzeichnet, dass der Ausgleichsraum nach aussen durch einen flexiblen Balg begrenzt ist, dass die Düse (6) für die hydraulische Flüssigkeit der Bodenplatte (3) starr zugeordnet ist, dass das Verhältnis aus der Länge und dem Durchmesser der Düse 4 bis 80 beträgt, und dass das Verhältnis aus dem Volumen des Arbeitsraumes (8) bei entlastetem Gummilager und dem Volumen der Düse (6) 4 bis 200 beträgt.

2. Gummilager nach Anspruch 1, dadurch gekennzeichnet, dass das Verhältnis aus der Länge und dem Durchmesser der Düse (6) 10 bis 30 und das Verhältnis aus dem Volumen des Arbeitsraumes (8) und dem Volumen der Düse (6) 8 bis 60 beträgt.

3. Gummilager nach Anspruch 1 bis 2, dadurch gekennzeichnet, dass die Scheibe ein durch ein membranartiges Übergangsstück mit der Bodenplatte verbundenes, steifes Plättchen ist.

4. Gummilager nach Anspruch 1 bis 3, dadurch gekennzeichnet, dass die Scheibe flexibel ausgebildet ist, und dass die Anschläge jeweils durch ein mit dem Tragflansch verbundenes, regelmässig wiederkehrende Aussparungen aufweisendes Gitter gebildet werden, das einen Oberflächenanteil von 40 bis 90% aufweist.

5. Gummilager nach Anspruch 1 bis 4, dadurch gekennzeichnet, dass die Düse durch eine spiralig die Scheibe umgebende Aussparung der Bodenplatte gebildet wird, und dass die Austrittsöffnungen beiderseits tangential in den jeweiligen Räumen enden.

6. Gummilager nach Anspruch 5, dadurch gekennzeichnet, das mehrere Düsen auf dem Umfang in gleichmässigen Abständen verteilt sind, und dass die Austrittsöffnungen gleichsinnig orientiert sind.

7. Gummilager nach Anspruch 1 bis 6, dadurch gekennzeichnet, dass die hydraulische Flüssigkeit ein Gemisch aus Glycerin und Wasser ist, und dass das Mischungsverhältnis beider Substanzen 1 bis 2 beträgt.

**Claims**

1. A resilient rubber bearing in which a bearing plate (1), an annular conical spring element (2) and a base plate (3) enclose a working chamber (8) filled with hydraulic fluid, which chamber is connected via a nozzle (6) to a compensating chamber (9), the base plate containing a disc (11) connected to it in a liquid-tight manner, which disc is movable parallel to the direction of the induced vibrations, whereby on either side of the disc (11) there is provided a stop (4, 5) connected to the base plate (3), characterised in that the compensating chamber is outwardly delimited by flexible bellows, that the nozzle (6) for the hydraulic fluid is rigidly coordinated with a base plate (63), that the ratio of the length to the diameter of the nozzle is from 4 to 80 and that the ratio of the volume of the working chamber (8) while the rubber bearing is unloaded to the volume of the nozzle (6) is from 4 to 200.

2. A rubber bearing according to Claim 1, characterised in that the ratio of the length to the diameter of the nozzle (6) is from 10 to 30 and the ratio of the volume of the working chamber (8) to the volume of the nozzle (6) is from 8 to 60.

3. A rubber bearing according to Claims 1 to 2, characterised in that the disc is a stiff plaque connected to the base plate by a membrane-like transition member.

4. A rubber bearing according to Claims 1 to 3, characterised in that the disc is of flexible construction and that the stops are each formed by a grid connected to the supporting flange and having a regular pattern of holes, the grid having a surface proportion of from 40 to 90%.

5. A rubber bearing according to Claims 1 to 4, characterised in that the nozzle is formed by a spiral cutout, surrounding the disc, in the base plate and that the exit orifices on either side each terminate tangentially in the respective chambers.

6. A rubber bearing according to Claim 5, characterised in that a plurality of nozzles are distributed at equal intervals over the periphery and that the exit orifices are oriented in the same direction.

7. A rubber bearing according to Claims 1 to 6, characterised in that the hydraulic fluid is a mixture of glycerol and water and that the ratio in which the two substances are mixed is from 1 to 2.

## Revendications

1. Support élastique en caoutchouc dans lequel une pièce support (1), un élément formant ressort (2), conique et de forme annulaire, et un corps (3) entourent une chambre de travail (8) remplie d'un liquide hydraulique et reliée par un ajutage (6) à une chambre d'équilibrage (9) et où le corps contient une rondelle (11) qui lui est reliée de façon étanche au liquide et peut se déplacer parallèlement à la direction des vibrations qui apparaîssent, une butée (4, 5) reliée au corps (3) étant prévue des deux côtés de la rondelle (11) caractérisé en ce que la chambre d'équilibrage est limitée vers l'extérieur par un soufflet souple (7), en ce que l'ajutage (6) pour le liquide hydraulique correspond strictement au corps (3); en ce que le rapport de la longueur et du diamètre de l'ajutage est de 4 à 80; et en ce que le rapport du volume de la chambre de travail (8) lorsque le support en caoutchouc n'est pas chargé et du volume de l'ajutage (8) est de 4 à 200.

2. Support en caoutchouc selon la revendication 1, caracterisé en ce que le rapport de la longueur et du diamètre de l'ajutage (6) est de 10 à 30 et le rapport du volume de la chambre de travail (8) et le volume de l'ajutage (6) de 8 à 60.

3. Support en caoutchouc selon les revendications 1 et 2, caractérisé en ce que la rondelle est une plaquette rigide reliée au corps par une pièce de transition formant membrane.

4. Support en caoutchouc selon les revendications 1 à 3, caractérisé en ce que la rondelle est conçue comme étant souple; et en ce que les butées sont respectivement formées d'une grille présentant des évidements qui se répètent régulièrement, reliée par le flasque porteur, grille qui présente une proportion de surface de 40 à 90%.

5. Support en caoutchouc selon les revendications 1 à 4, caractérisé en ce que l'ajutage est formé d'un évidement du corps entourant en spirale la rondelle; et en ce que les ouvertures de sortie débouchent tangentiellement des deux côtés dans les chambres respectives.

6. Support en caoutchouc selon la revendication 5, caractérisé en ce que plusieurs ajutages sont répartis sur la périphérie à égales distances; et en ce que les ouvertures de sortie son orientées dans le même sens.

7. Support en caoutchouc selon les revendications 1 à 6, caractérisé en ce que le liquide hydraulique est un mélange de glicérine et d'eau; et en ce que le rapport de mélange des deux substances est de 1 à 2.

Fig. 1

Fig. 2

_4,5_

6

12

Fig. 3

12    11    6    4

6

6

5

Fig. 4

6    4

5

L